# EUROPEAN PATENT APPLICATION

(11) **EP 2 874 402 A1**
(43) Date of publication of application: **20.05.2015**
(21) Application number: 14165289.1
(22) Date of filing: 18.04.2014
(51) Int. Cl.: H04N 21/422, H04N 21/41, H04N 21/436, H05B 33/08

(54) **Light control system and light control method thereof**

(30) Priority: 15.11.2013 TW 102141578
(71) Applicant: Gunitech Corp., Hsinchu County 307 (TW)
(72) Inventor: Wang, Chi-Jung, County 307 Qionlin Township Hsinchu (TW); Shiu, Huan-Ruei, County 307 Qionlin Township Hsinchu (TW); Chou, Po-Kuei, County 307 Qionlin Township Hsinchu (TW); Wu, Yueh-Chang, County 307 Qionlin Township Hsinchu (TW); Tsai, Ming-Chuan, County 307 Qionlin Township Hsinchu (TW); Tseng, Ya-Chi, County 307 Qionlin Township Hsinchu (TW); Chen, Yu-Feng, County 307 Qionlin Township Hsinchu (TW); Hung, Chien-Ju, County 307 Qionlin Township Hsinchu (TW)
(74) Representative: Altenburg, Bernardus Stephanus Franciscus

(57) **Abstract**

A light control system and a light control method thereof are disclosed. The light control system is used for controlling a light-emitting device. The light control system includes an ambient status sensing module, a storage module, a controlling module, and a driver module. The ambient status sensing module is used for sensing an ambient state to generate an ambient state value. The storage module has a database for storing a plurality of parameter values, wherein the plurality of parameter values are corresponded to a plurality of ambient state values. The controlling module is used for searching the plurality of parameter values stored within the database according to the ambient state value, so as to generating a controlling signal. The driver module is used for driving the light-emitting device according to the control signal.

## Description

### BACKGROUND OF THE INVENTION

### Field of the Invention

The present invention relates to a light control system and a light control method thereof; more particularly, the present invention relates to a light control system and a light control method thereof, the light control system and the light control method can adjust the light-emitting device according to the ambient state.

### Description of the Related Art

The light emitting diode (LED) has lower driving voltage, better luminous efficiency at low temperature, less pollution, and longer working life than the incandescent, the fluorescent, or other lighting source of the prior art. Furthermore, the light emitting diode can control the brightness, allowing the power consumption to be variably adjusted to extend the lighting time.

In the prior art, the controlling method of the LED light-emitting device provides a fixed switch, the user can use the fixed switch to turn-on, turn-off, or controlling the brightness. However, this controlling method is dull and limited to the position of the fixed switch. If the user wants to let the LED light-emitting device emit the light of different brightness or color, the user must manually operate the switch. Therefore, the application of the LED light-emitting device is limited, and the LED light-emitting device cannot attract the user who likes innovative ideas.

Thereof, there is a need to invent a light control system and a light control method thereof, which provide a more convenient automation method to adjust the light-emitting device, to resolve the disadvantage of the prior art.

### SUMMARY OF THE INVENTION

It is an object of the present invention to provide a light control system which can adjust the light-emitting device according to the ambient state.

It is another object of the present invention to provide a light control method applied to the abovementioned system.

To achieve the abovementioned object, the light control system of the present invention is used for controlling the light-emitting device. The light control system includes an ambient status sensing module, a storage module, a controlling module, and a driver module. The ambient status sensing module is used for sensing the ambient state to generate an ambient state value. The storage module includes a database for storing a plurality of parameter values, the plurality of parameter values are corresponded to the plurality of ambient state values. The controlling module is electrically connected to the ambient status sensing module and the storage module, for searching the plurality of parameter values stored within the database base on the ambient state value, so as to generating a controlling signal. The driver module is electrically connected to the controlling module and the light-emitting device, for driving the light-emitting device according to the control signal.

The light control method of the present invention includes the steps of: sensing an ambient state to generate an ambient state value; searching a plurality of parameter values within a storage module according to the ambient state value, to generate a controlling signal; and driving the light-emitting device according to the controlling signal.

### BRIEF DESCRIPTION OF THE DRAWINGS

FIG. 1 illustrates a structure drawing of the light control system of the present invention.
FIG. 2 illustrates a flowchart of the light control method of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

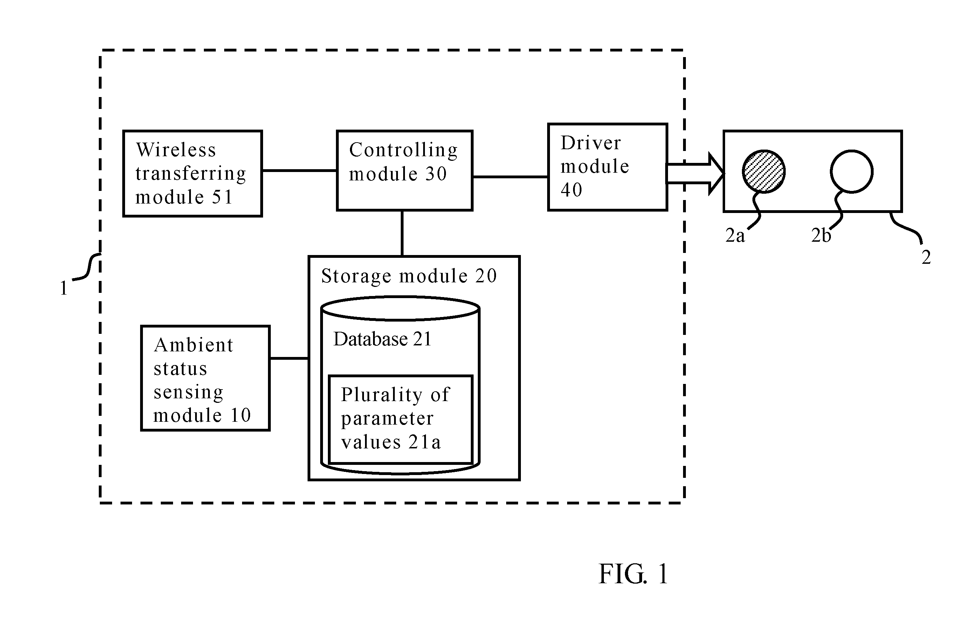

Please refer to FIG. 1, which illustrates a structure drawing of the light control system of the present invention.

The light control system 1 of the present invention is used for controlling or programmable controlling a lighting brightness or a lighting color of a light-emitting device 2. The light-emitting device 2 may include a plurality of light-emitting units 2a, 2b(as shown in FIG. 1) which are made of light emitting diode (LED), and the light-emitting device 2 can be a bulb, a light, a panel light, a table lamp, or a combination of the abovementioned devices. But the light-emitting device 2 of the present invention is not limited to the abovementioned device, and the amount of the light-emitting unit is not limited to the description in the present invention.

The light control system 1 includes an ambient status sensing module 10, a storage module 20, a controlling module 30, and a driver module 40. The ambient status sensing module 10 is used for sensing the ambient state around the light-emitting device 2, such as the ambient temperature, the ambient humidity, the ambient pressure, or a combination of any two or more among the ambient temperature, the ambient humidity, and the ambient pressure. Therefore, the ambient status sensing module 10 can obtain the ambient state value of the temperature, the humidity, or the pressure. The storage module 20 includes a database 21 for storing a plurality of parameter values 21a. The plurality of parameter values 21a are corresponded to the plurality of ambient state values. In the embodiment of the present invention, the ambient state is corresponded to a parameter value every 1 or 3 degree, but the present invention is not limited to that design. The controlling module 30 is electrically connected to the ambient status sensing module 10 and the storage module 20. The controlling module 30 is used for searching the plurality of parameter values 21a within the storage module 20 according to the ambient state value (such as the temperature, the humidity, and the pressure) sensed by the ambient status sensing module 10. Therefore, the controlling module 30 can find the corresponding parameter value 21a, and generate the corresponding controlling signal.

Finally, the driver module 40 is electrically connected to the controlling module 30 and the light-emitting device 2. The driver module 40 is used for driving the light-emitting device 2 according to the controlling signal generated by the controlling module 30. Therefore, the lighting color or the lighting brightness of the light-emitting device 2 can be changed according to the ambient state. Besides, if the light-emitting device 2 includes the plurality of light-emitting units 2a, 2b, the controlling module 30 can also control the driver module 40 to change all the plurality of light-emitting units 2a, 2b according to the temperature at the same time, or only change the lighting brightness or the lighting color of any one of the light-emitting unit 2a or the light-emitting unit 2b, to provide more kinds of changes.

Besides using the ambient status sensing module 10 to sense the ambient state for controlling the light-emitting device 2, the light control system 1 of the present invention can also include a wireless transferring module 51 or a cable transferring module 52. The wireless transferring module 51 is electrically connected to the controlling module 30, for receiving the remote controlling signal via a wireless method. Therefore, the controlling module 30 generates the controlling signal according to the remote controlling signal, allowing the driver module 40 to control the light-emitting device 2. The wireless transferring module 51 can be a bluetooth module, but the present invention is not limited to that design; the wireless transferring module 51 can also be a WiFi module or a Near Field Communication (NFC) module.

It is to be known that, each abovementioned modules can be a hardware device, a software program, a firmware, or the combination of the hardware device, the software program, and the firmware, the abovementioned modules can also be arranged via the circuit loop or other suitable type; besides, in addition to be arranged as a single type, each modules can also be arranged as a combination type. In a prefer embodiment, each modules is a software program storing in a memory, and each modules are executed via a processor to achieve the function of the present invention. Besides, the method of the prefer embodiment is only an example of the present invention; to avoid repeating, the all possible changes and combination will not be described. However, the person having ordinary skill in the art should understand that the abovementioned modules or units may not be necessary. While executing the embodiment, other detail module or unit of the prior art may be applied into the present invention. Each module or unit can be reduced or changed according to the requirement, and there may be other module or unit installed between any two modules.

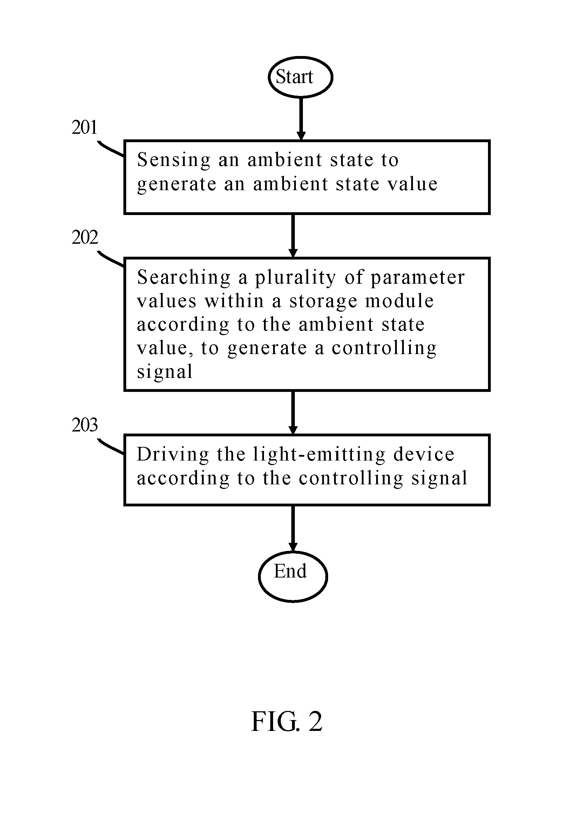

Please refer to FIG. 2, which illustrates a flowchart of the light control method of the present invention. It is to be known that, in the below description, the light control system 1 is used as an example for the light control method of the present invention, but the light control method of the present invention is not limited to be applied to the abovementioned light control system 1.

First, executing Step 201: sensing an ambient state to generate an ambient state value.

First, the ambient status sensing module 10 is used for sensing the ambient state around the light-emitting device 2, to generate the ambient state value. The ambient state can be the ambient temperature, the ambient humidity, the ambient pressure, or a combination of any one or more of the ambient temperature, the ambient humidity, and the ambient pressure, but the present invention is not limited to that design.

Then, executing Step 202: searching a plurality of parameter values within a storage module according to the ambient state value, to generate a controlling signal.

After the ambient status sensing module 10 senses and obtains the ambient state, the controlling module 30 searches the plurality of parameter values 21a within the storage module 20 according to the ambient state sensed by the ambient status sensing module 10. After the corresponding parameter value is found, the controlling module 30 can generate the controlling signal according to the corresponding parameter value.

Finally, executing Step 203: driving the light-emitting device according to the controlling signal.

Finally, the driver module 40 drives the light-emitting device 2 according to the controlling signal generated by the controlling module 30, allowing the light-emitting device 2 to change the lighting color or the lighting brightness of the emitting light according to the ambient state, or only change the lighting brightness or the lighting color of any one of the light-emitting unit 2a and the light-emitting unit 2b.

It is to be known that, the light control method of the present invention is not limited to the abovementioned step sequence; the abovementioned step sequence can be changed if the object of the present invention is achieved. Besides, the light-emitting device 2 can be controlled by the remote controlling signal received by the wireless transferring module 51 via the wireless method, but the present invention is not limited to that design.

Via the light control system 1 and the light control method of the present invention, the lighting method of the light-emitting device 2 can have variety of changes, and the user does not need to give a complex instruction, that is more convenient for the user.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A light control system (1), used for controlling a light-emitting device (2), the light control system (1) comprising:
an ambient status sensing module (10), used for sensing an ambient state to generate an ambient state value;
a storage module (20), comprising a database (21) for storing a plurality of parameter values, the plurality of parameter values (21a) are corresponding to the plurality of ambient state value;
a controlling module (30), electrically connecting to the ambient status sensing module (10) and the storage module (20), used for searching the plurality of parameter values (21a) stored within the storage module (20) according to the ambient state value, to generate a controlling signal; and
a driver module (40), electrically connecting to the controlling module (30) and the light-emitting device (2), used for driving the light-emitting device (2) according to the controlling signal.

2. The light control system (1) as claimed in Claim 1, wherein the driver module (40) is used for changing a lighting brightness or a lighting color of the light-emitting device (2) according to the ambient state value.

3. The light control system (1) as claimed in Claim 1 or 2, wherein the light-emitting device (2) comprises a plurality of light-emitting units (2a, 2b), the driver module (40) is used for changing a lighting brightness or a lighting color of any one of the plurality of light-emitting units (2a, 2b) according to the ambient state value.

4. The light control system (1) as claimed in Claim 1, 2, 3 or 4, further comprising:
a wireless transferring module (51), electrically connecting to the controlling module, the controlling module (30) is used for receiving a remote controlling signal to control the light-emitting device (2).

5. The light control system (1) as claimed in Claim 4, wherein the wireless transferring module (51) is a bluetooth module.

6. The light control system (1) as claimed in Claim 1, 2, 3, 4 or 5, wherein the ambient status sensing module (10) is used for sensing an ambient temperature, an ambient humidity, an ambient pressure, or a combination of any two or more among the ambient temperature, the ambient humidity, and the ambient pressure.

7. A light control method, applied to a light control system (1) for controlling a light-emitting device (2), the light control method comprising the steps of:
sensing an ambient state to generate an ambient state value; searching a plurality of parameter values (21a) within a storage module (20) according to the ambient state value, to generate a controlling signal; and
driving the light-emitting device (2) according to the controlling signal.

8. The light control method as claimed in Claim 7, further comprising step of:
changing a lighting brightness or a lighting color of the light-emitting device (2) according to the ambient state value.

9. The light control method as claimed in Claim 7 or 8, wherein the light-emitting device (2) comprises a plurality of light-emitting units (2a, 2b), and the light control method further comprises step of:
changing a lighting brightness or a lighting color of any one of the plurality of light-emitting units (2a, 2b) according to the ambient state value.

10. The light control method as claimed in Claim 7, 8, or 9, further comprising the step of:
receiving a remote controlling signal to control the light-emitting device (2) via a wireless method.

11. The light control method as claimed in Claim 7, 8, 9 or 10 wherein the step of sensing the ambient state further comprises:
sensing an ambient temperature, an ambient humidity, an ambient pressure, or a combination of any two or more among the ambient temperature, the ambient humidity, and the ambient pressure.
